Europäisches Patentamt

European Patent Office

Office européen des brevets

(19)

(11) Publication number: **0 053 209**
**B1**

# EUROPEAN PATENT SPECIFICATION

(12)

(45) Date of publication of patent specification: **20.07.88**

(51) Int. Cl.⁴: **F 16 D 41/08,** F 16 D 41/02 //
B66D1/14

(21) Application number: **80304306.6**

(22) Date of filing: **01.12.80**

(54) **Apparatus for selectively transmitting or blocking the transmission of torque.**

(43) Date of publication of application:
**09.06.82 Bulletin 82/23**

(45) Publication of the grant of the patent:
**20.07.88 Bulletin 88/29**

(84) Designated Contracting States:
**AT BE CH DE FR GB IT LI LU NL SE**

(56) References cited:
**FR-A- 430 176
GB-A- 290 110
GB-A- 616 021
US-A-3 447 643
US-A-3 765 521**

(73) Proprietor: **West, Joe Edward**
**141 N. Oak Trail**
**Coppell Texas 75019 (US)**

(72) Inventor: **West, Joe Edward**
**141 N. Oak Trail**
**Coppell Texas 75019 (US)**

(74) Representative: **Dealtry, Brian et al**
**Eric Potter & Clarkson 14, Oxford Street**
**Nottingham NG1 5BP (GB)**

## Description

This invention relates to apparatus for selectively transmitting torque from a torque input to a torque output, and for blocking transmission of torque from the output. The apparatus is applicable to stepping clutches, load holders, and winches, for example.

There are many situations where it is desirable to control the transmission of torque through an apparatus, for example, to transmit it in one direction through a power train (from input to load), but block its transmission in the opposite direction (from load to input), in one or both directions of rotation. Apparatus for accomplishing such functions has in the past been complex in construction and limited in capabilities.

GB—A—290 118 discloses an automatically acting brake for hoisting devices and the like, having a drum, against whose cylindrical inner surface bear two arcuate brake shoes. However, the brake shoes are pivotally mounted on a plate connected to the driven shaft, and the sole braking force is by virtue of a spring positioned between the free ends of the shoes and urging them outwardly. This has the particular disadvantage that the braking force exerted is entirely dependent upon the strength of the spring, and if the spring becomes weakened, for example by heat generated by friction in use, the effectiveness of the brake is greatly reduced.

U.S. Patent 3447643 (corresponding to the preamble of claim 1) discloses a reversible one-way brake wherein a resilient brake band frictionally engages the internal surface of a brake drum and is restrained from movement by a movable stop and in such a condition rotation of the drum is permitted. To actuate the device to brake rotation of the drum the movable stop is moved to release the brake band which in turn initially rotates with the drum before one end thereof engages a fixed stop. Thereafter continued rotation of the drum causes the brake band to flex outwards due to its frictional contact with the drum and thereby increases its braking effect on the drum.

According to the present invention there is provided apparatus for selectively transmitting torque from a torque input to a torque output, and for blocking transmission of torque from said output to said input, the apparatus including a drum having a cylindrical inner surface and a friction member positioned within said drum, said friction member having an arcuate surface bearing against the inner surface of said drum and two end portions lying on the one side of the axis of said drum,

said end portions being displaceable toward and away from each other each of them having two force transmitting surfaces oriented generally radially of said drum,

said force transmitting surfaces having a first surface being oriented such that a force applied generally orthogonally therethrough by a first force transmitting means moves the friction member into jamming relationship with the inner surface of said drum; and

said force transmitting surfaces having a second surface being oriented such that a force applied generally orthogonally therethrough by a second force transmitting means slidingly rotates said friction member within said drum without jamming thereagainst;

characterised in that:

said friction member comprises a pair of shoes and a spanner bar extending between said shoes and engaging their inner surfaces at points lying on the other side of the axis of said drum, the spanner bar being free from attachment either to said torque input or to said torque output;

said end portions of the shoes are arranged in such a manner that each of them can alternately be clamped in both circumferential directions via their corresponding first and second force transmitting surfaces between said first and second force transmitting means.

Accordingly the present invention provides apparatus for transmitting torque, and for controlling its transmission both with respect to direction through a power train and with respect to direction of rotation. The apparatus may be a link in the power train itself, or in some applications, a side branch of the train which serves only to block torque transmission in a selected direction, without transmitting torque in the other direction.

The apparatus of the invention is characterized by its simplicity, ruggedness in construction, and reliability in operation. In a given device, the geometry of the parts is fixed, and they respond to applied forces predictably without need or adjustment or tuning.

In its preferred embodiments, the invention comprises a drum having a generally cylindrical inner surface. Depending upon the application, the drum may be mounted for rotation in either or both directions about its axis, or it may be fixed against rotation.

A pair of shoes having arcuate surfaces generally conforming to the inner surface of the drum are mounted for selective relative or absolute rotation therein by sliding around the inner surface of the drum. The ends of the respective shoes approach each other but do not meet.

A spanner bar holds the shoes apart on one side of the axis of the drum. The spanner bar bears against the inner surfaces of the shoes to hold them generally against the inner surface of the drum. At their ends lying across the drum axis from the spanner bar the shoes are displaceable toward each other. In many cases it will be desirable to lightly bias these ends of the shoes apart.

In accordance with the invention, the spanner bar is so positioned with respect to the drum axis that a perpendicular struck from its centerline at the intersection of the centerline with the inner drum surface forms an angle with a drum inner surface tangent struck from the same point which is in the lock angle range for the materials employed to form the drum and shoe surface.

Such an angle is generally in the neighbourhood of seven (7) degrees. Such an angle is sometimes referred to herein as a jamming angle.

Torques, and blocking torques, are transmitted into and out of the device through surfaces provided on the shoes, these surfaces being termed herein "force transmitting surfaces". The force transmitting surfaces of the shoes are oriented generally radially of the drum so that a force applied generally orthogonally therethrough produces a torque about the axis of the drum. The force transmitting surfaces may be variously formed, and may comprise holes or recesses in the shoes, lateral or transverse projections on the shoes, or the ends of the shoes.

Cooperating with the force transmitting surfaces are force transmitting means which are engageable with the surfaces under various conditions to produce or block the transmission of torque. These forces transmitting means are mounted for rotation about the drum axis, and may be positioned entirely within the confines of the drum, or partly externally of the drum. The force transmitting means may take various forms such as yokes with opposed working faces, collars with radial fingers, disks with pins, slotted disks, etc.

In operation, torque is applied to a shoe of the device of the invention through a force transmitting means acting against a force transmitting surface of the shoe. If the force is applied in a direction such that it tends to displace the shoes toward each other at their ends which lie across the drum axis from the spanner bar, the shoes slidingly rotate with respect to the drum (assuming the input force is large enough to overcome internal and external forces opposing it). In many applications the drum will be fixed, so the rotation of the shoes is absolute, but in other applications the drum will be rotating, so the shoe rotation will be relative, with respect to the drum.

In devices of the invention which form a direct link in a power train, as distinguished from a side branch, the shoes which are rotating in the manner just described have another force transmitting surface suitably located thereon which engages another force transmitting means mounted for rotation about the drum axis, thereby applying an output torque to it and causing it to rotate, (again assuming the input forces are large enough to overcome internal and external forces opposing them). Torque consuming apparatus of many sorts may be connected to the second mentioned torque transmitting means.

With the device operating in the manner just described, if torque input is discontinued, the torque consuming apparatus (the "load") will, in many cases, tend to apply an undesired back torque, either in the original direction of rotation, or in the opposite direction. This back torque, and/or the movement resulting therefrom is often undesirable in its effect on the load or the input power source, or both. In accordance with the invention, the second-mentioned force transmitting means applies a force through a force transmitting surface of a shoe in a direction tending to displace the shoes away from each other at their ends which lie across the drum axis from the spanner bar. As a result, the shoes are thrown into a jamming relationship with the inner wall of the drum, because of the above-mentioned jamming angle. Rotation (relative or absolute) of the shoes with respect to drum thus becomes impossible, and ceases. Transmission of torque is blocked by the jammed shoes.

The fundamental apparatus as just described may be incorporated in many types of equipment performing a wide variety of functions. In the detailed description which follows, it is disclosed as embodied in a cable winch, a unidirectional stepping clutch, a bi-directional stepping clutch, and a two-way load holder. These examples are intended to illustrate the wide applicability of the invention.

Reference is now made to the accompanying drawings, in which:—

Fig. 1 is an isometric view of a cable winch embodying the torque transmission and blocking device of the invention;

Fig. 2 is a longitudinal cross-sectional view of the winch of Fig. 1, the section being taken on the line 2—2 of Fig. 1;

Fig. 3 is an isometric view of a shoe constructed in accordance with the invention, as used in the embodiment of Fig. 1, as well as in other embodiments;

Fig. 4 is an isometric view of a force transmitting means or yoke constructed in accordance with the invention, as used in the embodiment of Fig. 1, as well as in other embodiments;

Fig. 5 is a transverse sectional elevational view of the winch of Fig. 1, the section being taken on the line 5—5 of Fig. 2;

Fig. 6 is a fragmentary exploded isometric view of the major torque transmitting and blocking parts of the winch of Fig. 1;

Figs. 7, 8 and 9 are sequential diagrammatic sectional elevational views of the torque transmitting apparatus of the winch of Fig. 1, on a somewhat reduced scale, showing stages in the operation of the device;

Fig. 10 is an isometric view of a unidirectional stepping clutch embodying the torque transmission and blocking device of the invention;

Fig. 10A is an isometric view of a bi-directional stepping clutch embodying the torque transmission and blocking device of the invention;

Fig. 11 is a longitudinal cross-sectional view of the clutch of Fig. 10, the section being taken on the line 11—11 of Fig. 10;

Fig. 12 is a transverse sectional elevational view of the clutch of Fig. 10, the section being taken on the line 12—12 of Fig. 11;

Fig. 13 is an isometric view of a force transmitting means or collar with projecting finger constructed in accordance with the invention as used in the embodiment of Figs. 10 and 10A;

Figs. 14, 15, 16 and 17 are diagrammatic sequential sectional elevation views of the clutch of Fig. 10, on a somewhat reduced scale, showing successive stages in a stepping operation;

Fig. 18 is a fragmentary isometric view showing the back-side of the clutch of Fig. 10;

Fig. 19 is an isometric view, partly broken away, of a two-way load holder embodying the torque transmitting and blocking device of the invention:

Figs. 20 and 21 are somewhat diagrammatic elevational views on a reduced scale of the load holder of Fig. 19 as applied in a conveyor system, illustrating different operating conditions to which the load holder may be exposed.

A. The invention as embodied in a winch:

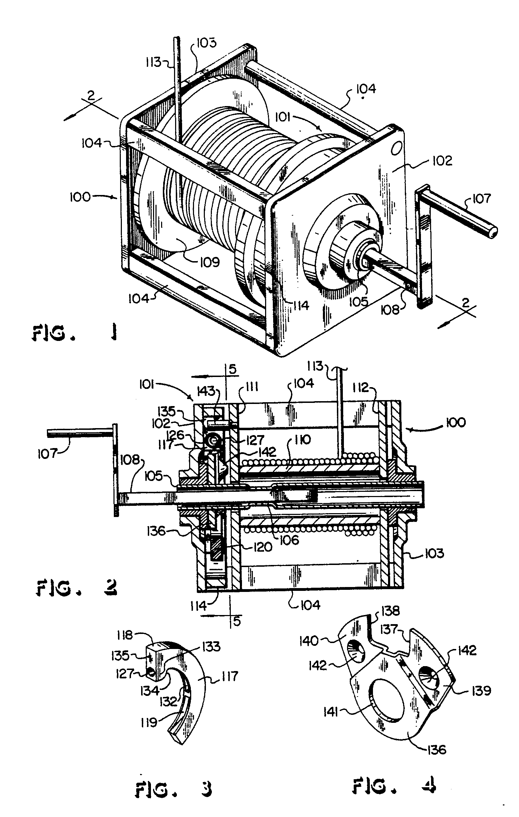

Figs. 1—9 illustrate the torque transmitting and blocking device of the invention embodied in a cable winch, such as may be employed in a flagpole winch. In these Figs. the winch is designated generally as 100, while the torque transmission and blocking device is designated generally as 101.

Winch 100 has a frame formed of front plate 102 and rear plate 103, held in spaced parallel relation by spacer bars 104. A hollow drive shaft 105 is journalled for rotation in the center of plates 102, 103. Part of shaft 105 is swaged down to square section, as at 106, for engagement with a removable crank 107 having a shank 108 of square cross section.

A cable drum 109, formed of barrel 110 and end flanges or disks 111, 112, is mounted for rotation on drive shaft 105. Cable 113 is wound on the barrel, and leads to the load. Cable drum 109 is interconnected for rotation to drive shaft 105 through the torque transmission and blocking device 101, as is explained below.

The torque transmission and blocking device 101 includes generally cylindrical drum 114, which is mounted on the back of front plate 102, and is coaxial with drive shaft 105 and barrel 110. Drum 114 has a generally cylindrical inner wall 115.

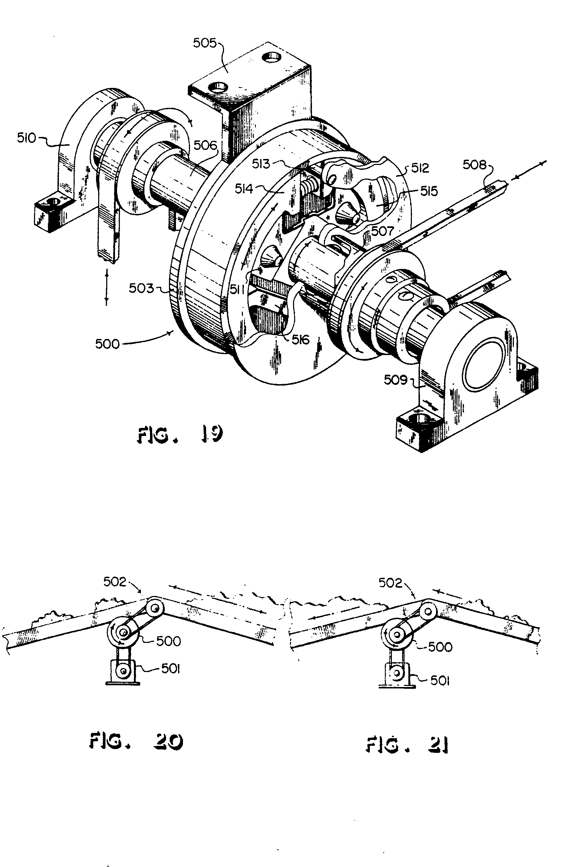

The parts of the torque transmission and blocking device which are positioned within drum 115 can best be understood from a consideration of Fig. 2—6, and particularly Figs. 5 and 6.

A pair of shoes 116, 117 are positioned within drum 114. The shoes have arcuate outer surfaces 118 generally conforming to the curvature of wall 115. It is preferred that the two shoes subtend equal arcs and that the arc subtended by each shoe be a substantial portion of a semicircle.

Each shoe is provided with a recess 119 on its inner or convex surface for receiving and engaging an end of spanner bar 120. Spanner bar 120 engages the shoes at points lying on the same side of the axis 121 of drum 114, as can best be seen from Fig. 5. Spanner bar 120 is offset somewhat from axis 121 to form a good jamming angle. This is illustrated in Fig. 5 where it can be seen that a tangent 125 struck from the inner wall 115 of the drum at the point where the wall is intercepted by the end-to-end centerline 123 of the spanner bar forms an angle 124 with a line 122 drawn perpendicular to the centerline 123 at the same point on the wall, which angle is about 7 degrees.

At their ends on the opposite side of the drum axis from their points of engagement with the spanner bar, shoes 116 and 117 are displaceable toward each other. It is preferred, but not necessary, that they be lightly biased apart, as by spring 126, which fits into recesses 127 provided in the end faces of the shoes.

Certain surfaces of shoes 116, 117 are termed herein "force transmitting surfaces" because of their function in the operation of the device. As will become apparent as this and other embodiments of the invention are discussed, these surfaces may be variously formed and positioned on the shoes. Despite such variations, the force transmitting surfaces share the characteristic that they are at least in part generally radially oriented with respect to the drum. This means that forces applied generally orthogonally through them (either into the shoe or out of the shoe) result in the generation of a torque about the axis of the drum. For example, one force transmitting surface of shoe 116 is end face 131, as is discussed below. As can be seen from Fig. 5, the plane of face 131 is approximately parallel to a vertical radius of the drum; hence it is "generally radially" oriented. A consideration of other force transmitting surfaces as they are discussed below with reveal that they have similar orientations. A force applied generally orthogonally into or out of the plane of face 131 will create a torque about drum axis 121. See Fig. 5.

In the embodiment of Figs. 1—6, each shoe has two force transmitting surfaces. Shoe 116 has a recess 128 formed in its convex wall, and a radially inwardly extending leg 129 formed adjacent the recess. These two constructions taken together provide shoe 116 with its first force transmitting surface 130.

The second force transmitting surface of shoe 116 is its end face 131.

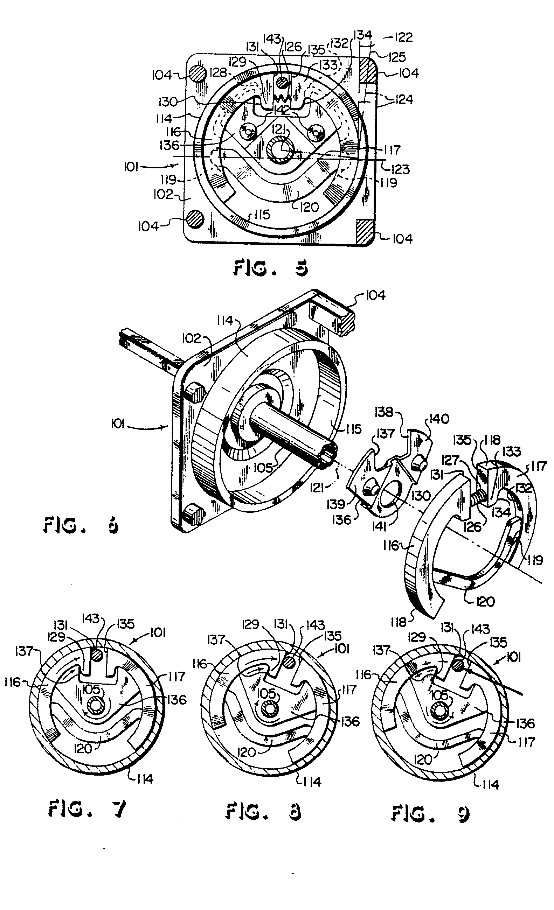

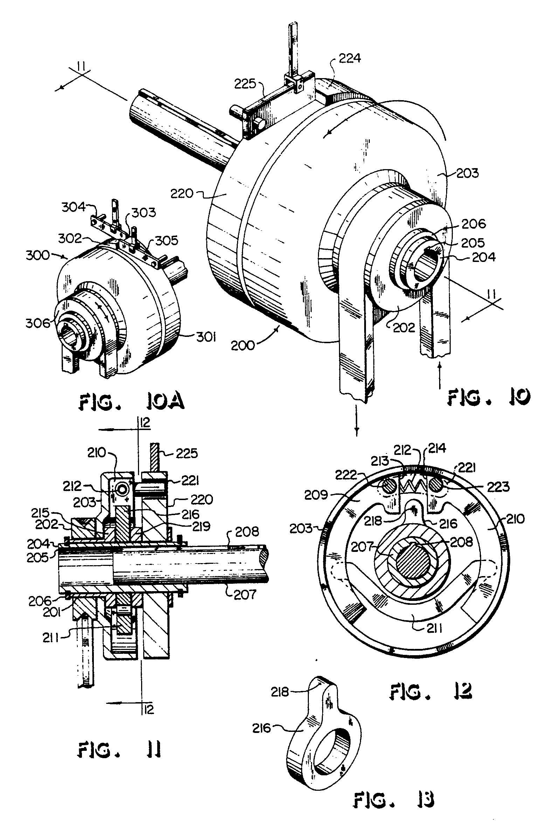

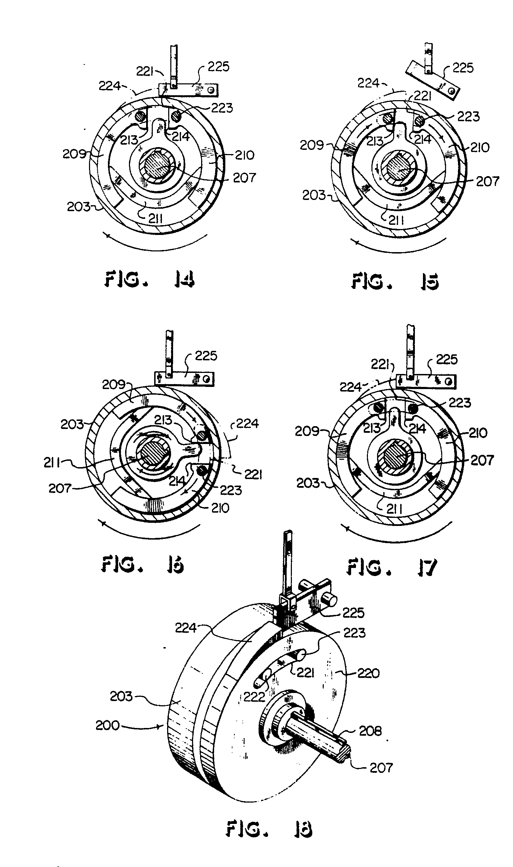

Similarly, shoe 117 is provided with a recess 132 and leg 133 to form its first force transmitting surface 134. (See Fig. 3). The second force transmitting surface of the shoe 117 is its end face 135.

The device of Figs. 1—6 is equipped with two force transmitting means, one of which coooperates with the input or drive shaft 105, and the other of which cooperates with the cable drum 109 which is the output mechanism of the winch. The input force transmitting means is yoke 136, which is secured on drive shaft 105 for rotation therewith. Yoke 136 has opposed faces 137 and 138, which cooperate with force transmitting surfaces 130 and 134 of shoes 116 and 117 respectively. As can best be seen in Fig. 5, opposed faces 137, 138 are located on legs 139, 140 of the yoke, which legs fit into recesses 128, 132 of shoes 116, 117 respectively. Yoke 136 is apertured at 141 to fit on drive shaft 105. In the preferred embodiment yoke 136 is formed of sheet metal. Bosses 142 aid in maintaining it properly positioned.

The output force transmitting means comprises pin 143 which projects laterally from cable drum disk 111 into the space between force transmitting surface 131 of shoe 116 and force transmitting surface 135 of shoe 117. Pin 143 is thus in a position to bear against, or to be borne against by, force transmitting surfaces of both shoes.

With the foregoing description of the components of the torque transmitting and blocking device of the invention as embodied in a winch in hand, its mode of operation can be explained with reference to the diagrams of Figs. 7—9.

Figs. 7 and 8 show how the device operates to transmit torque, and thus motion, from input shaft 105 to the output cable drum which carries pin 143. As shaft 105 is rotated clockwise (as is indicated by the arrow around the shaft), it rotates yoke 136 in the same direction. The face 137 of the yoke pushes against surface 129 of shoe 116 to rotate it clockwise also. The force exerted by yoke 136 on shoe 116 is in a direction tending to displace face 131 toward face 135, although such displacement does not occur because shoe 117 and spanner bar 120 rotate along with shoe 116.

As shoe 116 is driven clockwise by yoke 136, its surface 131 pushes against pin 143 to rotate it and the cable drum on which it is carried. Torque, and rotary motion, are thus transmitted from input shaft to output drum.

A consideration of the symmetry of the parts shown in Figs. 7 and 8 will lead to the conclusion that the device will operate in the same manner if torque is input to drive shaft 105 to rotate it in a counterclockwise direction. Thus by turning crank 107 (Fig. 1) in one direction cable can be wound onto the cable drum, and by turning the crank in the other direction cable can be played off the drum in a controlled manner.

Fig. 9 shows the torque-blocking condition of the device which occurs when an attempt is made, by application of force through the cable, or directly upon the cable drum, to rotate the cable drum other than by means of the crank. When a force (represented by the heavy straight arrow in Fig. 9) is applied to pin 143 in an attempt to rotate it counterclockwise, the pin pushes against surface 131 of shoe 116, that is, in a direction tending to displace surfaces 131 and 135 away from each other. This throws shoes 116 and 117 into a jamming relationship with the wall of drum 114, and prevents the transmission of torque to shaft 105. The counterclockwise movement thus attempted, and indicated by the phantom arrows in Fig. 9 cannot, and does not take place.

Again, a consideration of the symmetry of the parts shown in Fig. 9 will lead to the conclusion that the device will operate in the same manner if force is applied through pin 143 in an attempt to rotate the cable drum in clockwise position. The cable drum is effectively frozen by the device against all movement except that caused by forces applied through shaft 105.

B. The invention as embodied in a unidirectional stepping clutch

Fig. 10, and Figs. 11—18 illustrate the torque transmission and torque blocking device of the invention as embodied in a uni-directional stepping clutch, that is, a clutch in which rotational motion in one direction of rotation is continuously supplied at the input, and a single revolution (or group of revolutions or even a fraction of a revolution) is obtained at chosen times at the output.

Attention is first directed to Figs. 10, 11—13 and 18. In these Figs. the clutch is designated generally as 200. It has a hollow input shaft or bushing 201 on which belt driven sheave 202 is mounted. Rotation of the sheave thus results in rotation of shaft 201. Also mounted for rotation on and with shaft 201 is clutch drum 203.

The output shaft of clutch 200 is formed in two pieces for convenience. One piece is a hollow shaft 204, having an internal keyway 205. Shaft 204 passes through hollow input shaft 201, and the fit between the two admits of relative rotation between them. A keeper ring 206 fixes the axial relationships of shafts 201 and 204. The other piece of the output shaft is solid shaft 207 which has an external spline 208 thereon. Shaft 207 fits into hollow shaft 204, with spline 208 interfitting in keyway 205 so that the two shafts are united for rotation. Shaft 207 is normally a part or component of the equipment driven by the stepping clutch.

Within clutch drum 203 are positioned shoes 209 and 210, which are engaged by spanner bar 211. Spanner bar 211 is positioned on one side of the drum axis to form a jamming angle in the manner described above. Shoes 209, 210 are lightly biased apart by spring 212 working against shoe faces 213, 214.

It should be noted that input shaft 201 has a flanged end 215 (Fig. 11) which serves as a spacer for force transmission means 216. Transmission means 216 is in the form of a collar fixed on output shaft piece 204 for rotation therewith, with a radially projecting finger 218 thereon. As can be seen in Fig. 12, finger 218 projects into the space between faces 213 and 214 of shoes 209, 210, and is in position to act on, and be acted upon by them.

A spacer 219 separates force transmission means 218 from control disk 220, which is journalled on output shaft piece 204, and is free to rotate with respect thereto. Control disk 220 comprises a force transmission means for the device. It is provided with a slot 221 into which projects pin 222 on shoe 209 and pin 223 on shoe 210. Pins 222 and 223 constitute force transmission surfaces of shoes 209, 210.

Control disk 220 has a stop 224 on its periphery which cooperates with liftable dog 225 to prevent rotation of the disk except when such rotation is desired.

The operation of stepping clutch 200 may be understood from a consideration of Figs. 14—17. In Fig. 17, the unit is shown with torque being continuously input through shaft 201 (not visible as Fig. 17 is drawn), which causes drum 203 to continuously rotate. Disk 220, which is in front of the plane of the drawing in Figs. 14—17, is indicated in Fig. 17 as restrained against rotation by dog 225 working against stop 224.

Under these conditions disk 220 exerts a virtual force by means of slot 221 against pin 223 in a direction tending to displace shoe end faces 213, 214 toward each other. This force holds shoes 209 and 210 out of jamming relationship with drum 203, and at a standstill. The standstill condition of the shoes is in fact relative rotation with respect to the drum, since the drum is rotating.

The start of an output shaft revolution is shown in Fig. 15, where dog 225 is shown as lifted, freeing disk 220 to rotate. Shoes 209, 210 will start to decelerate with respect to the drum, i.e., start to move with it because of friction between the drum and shoes, upon the removal of the above described force exerted by the disk 220 on pin 223. This will quickly bring shoe face 213 into contact with finger 218, and throw the shoes into jamming relationship with the rotating drum.

In Fig. 16, the jammed shoes are shown pushing finger 218 clockwise, which imparts clockwise rotation to output shaft 207. The jammed shoes also rotate disk 220 clockwise, because pin 223 pushes on the edge of slot 221. Such rotation continues until dog 225 engages stop 224 to halt the rotation of disk 220, as is shown in Fig. 17. The halted disk again applies a virtual force through pin 223 to unjam the shoes. This removes the torque applied to the output shaft through finger 218, and rotation of the output shaft ceases until dog 225 is again lifted.

If more than one output shaft rotation is desired, dog 225 may be held in lifted position to allow more than one shaft revolution. On the other hand, if fractional revolutions of the output shaft are desired, the number of stops on the periphery of disk 220 may be increased or a plurality of dogs may be placed around disk 220.

If power input through sheave 202 is discontinued, and an attempt is made to rotate output shaft 207, it will be found that shaft 207 is restrained from such rotation because finger 218 throws the shoes into jamming relationship with the now stopped drum 203.

C. The invention as embodied in a bi-directional stepping clutch

Fig. 10A illustrates a bi-directional stepping clutch 300 constructed in accordance with the invention. In structure it is the same as uni-directional clutch 200 of Figs. 10 and 11—18, except that disk 301 is provided with two oppositely facing stops 302, 303, and each stop is provided with an appropriately oriented dog 304, 305. The belt of sheave 306 is powered to drive in either direction.

A consideration of the symmetry of the parts of the clutch, as explained in connection with Figs. 10 and 11—18, will reveal that the mode of operation illustrated in Figs. 14—17 will be the same if the rotation is in the counterclockwise direction instead of the clockwise direction.

D. The invention as embodied in a two-way load-holder

Figs. 19—21 illustrate the application of the invention to a two-way load-holder useful in power trains in which torque may be applied to the load in either direction of rotation, and in which the load is liable to apply a back torque to the power train in either direction.

Such a situation is shown very diagrammatically in Figs. 20 and 21. There, load-holder 500 forms part of a power train between power source 501 and conveyor system 502. The conveyor system is one which has a crest or high point in it, and as Figs. 20 and 21 are drawn, is transporting bulk material from right to left. In Fig. 20, the heavier load is to the right of the power source. If a power failure occurs while this situation obtains, the conveyor will run away to the right, i.e. in the backward direction, in the absence of means for holding it in stopped position.

In Fig. 21, the heavier load is to the left of the power source. If a power failure occurs while this situation obtains, the conveyor will run away to the left, i.e. in the forward direction, in the absence of means for holding it in stopped position.

Fig. 19 illustrates the structure of load-holder 500. It comprises drum 503, mounted by bracket 505 so it will not rotate; belt driven input shaft 506; output shaft 507; driving belt 508; and pillow blocks 509, 510. The parts mounted internally of drum 503 are the same in structure and arrangement as those in the winch embodiment of Fig. 1, and they operate in the same way. Thus, they include yoke 511, mounted on input shaft 506; disk 512 carrying pin 513, shoes 514 and 515; and spanner bar 516.

In operation, load-holder will transmit torques in either direction of rotation from the input shaft to the output shaft, but will block transmission of back torques in either direction applied by the output shaft, and thus effectively hold the load against movement in the event of a failure in the power train.

**Claims**

1. Apparatus for selectively transmitting torque from a torque input (105, 201, 506) to a torque output (109, 204, 507), and for blocking tranmission of torque from said output to said input, the apparatus including a drum (114, 203, 503) having a cylindrical inner surface and a friction member (116, 117; 209, 210; 514, 515) positioned within said drum, said friction member having an arcuate surface bearing against the inner surface of said drum and two end portions (129, 133) lying on the one side of the axis of said drum,

said end portions being displaceable toward and away from each other each of them having two force transmitting surfaces (130, 131, 134, 135; 213, 214, 222, 223) oriented generally radially of said drum,

said force transmitting surfaces having a first surface (131, 135; 213, 214) being oriented such that a force applied generally orthogonally therethrough by a first force transmitting means (143; 218; 513) moves the friction member into jamming relationship with the inner surface of said drum; and

said force transmitting surfaces having a second surface (130, 134; 222, 223) being oriented such that a force applied generally orthogonally therethrough by a second force transmitting means (136; 220; 301; 511) slidingly rotates said friction member within said drum without jamming thereagainst; characterised in that:

said friction member comprises a pair of shoes (116, 117; 209, 210; 514, 515) and a spanner bar (120, 211, 516) extending between said shoes and engaging their inner surfaces at points lying on the other side of the axis (121) of said drum, the spanner bar being free from attachment either to said torque input or to said torque output;

said end portions (129, 133) of the shoes are arranged in such a manner that each of them can alternately be clamped in both circumferential directions via their corresponding first and second force transmitting surfaces between said first and second force transmitting means.

2. Apparatus according to Claim 1, characterised in that it comprises biasing means (126, 212) biasing the ends of said shoes lying on the side of the drum axis opposite their points of engagement with said spanner bar away from each other.

3. Apparatus according to Claim 1 or 2, characterised in that at least one of said force transmitting surfaces comprises a wall (130, 134) of a cavity formed on the radially inward surface of a shoe.

4. Apparatus according to Claim 1 or 2, characterised in that at least one of said force transmitting surfaces comprises an extension (222, 223) of said shoe projecting axially of said drum.

5. Apparatus according to any of Claims 1 to 4, characterised in that said force transmitting means comprises a shaft (105, 506) axially aligned with the axis of said drum and a yoke (136, 511) mounted for rotation with said shaft, said yoke being engageable with at least one of said force transmitting surfaces.

6. Apparatus according to Claim 5, characterised in that said shaft is rotatable in both directions and said yoke is engageable with two oppositely facing second force transmitting surfaces.

7. Apparatus according to any of Claims 1 to 4, characterised in that said force transmitting means comprises a shaft (207, 507) axially aligned with the axis of said drum and a disc (220, 512) mounted for rotation with said shaft, said disc having a pin (513) therein or slot (221) therein, the pin or slot being engageable with at least one of said force transmitting surfaces (222, 223).

8. Apparatus according to any of Claims 1 to 4, characterised in that said force transmitting means comprises a shaft (204) axially aligned with the axis of said drum and a collar (216) mounted for rotation with said shaft, said collar having a radially extending finger (218) thereon engageable with at least one (213, 214) of said force transmitting surfaces.

9. Apparatus according to Claim 1, characterised in that said torque input comprises a first shaft (105) mounted axially of said drum and rotatable with respect thereto,

said torque output comprises a second shaft (110) mounted axially of said drum and rotatable with respect thereto,

said force transmitting surfaces comprise four surfaces (130, 131, 134, 135) each of said shoes (116, 117) having a first surface of the one kind (131, 135) and a second surface of the other kind (130, 134), and

said force transmitting means comprises said second force transmitting means (136) mounted for rotation with said first shaft (105) and engageable with both surfaces of said other kind (130, 134) and said first force transmitting means (111, 143) mounted for rotation with said second shaft (110) and engageable with both surfaces (131, 135) of said one kind.

10. Apparatus according to Claim 9, characterised in that said force transmitting surfaces of said other kind comprise walls (130, 134) of cavities formed on the radially inward surface of each shoe, and said second force transmitting means comprises a yoke (136) having two legs (139, 140) one of which extends into each of said cavities.

11. Apparatus according to Claim 9, characterised in that said force transmitting surfaces of said one kind (131, 135) comprise opposed end faces of said shoes (117, 118), and said first force transmitting means comprises an element (111) extending radially of said drum axis and having a part (143) interposed between said opposed end faces.

12. Apparatus according to Claim 1, characterised in that said torque input comprises a first shaft (201) rotatably mounted axially of said drum and adapted to rotate said drum (203, 300) therewith, said torque output comprises a second shaft (204) rotatably mounted axially of said drum, said force transmitting means comprises said second force transmitting means (220, 301) mounted for rotation axially of said drum and engageable with one surface (222, 223) of said shoes and said first force transmitting means (216, 218) mounted for rotation with said second shaft (204) and engageable with the other surface (213, 214) of said shoes, and interlock means (224, 225; 302—305) are provided for selectively admitting and restraining rotation of said second force transmitting means in the same direction as the direction of rotation of said drum.

13. Apparatus according to Claim 12, characterised in that said first shaft (306) is adapted for rotation in both directions, said force transmitting surfaces comprise four surfaces (213, 214, 222, 223), each of said shoes having a surface (222, 223) of the one kind and a surface (213, 214) of the other kind, said second force transmitting means (301) is engageable with both of the surfaces of the other kind, said first force transmitting means (216, 218) is engageable with both of the surfaces of the one kind, and said interlock means for selectively admitting and restraining rotation of said second force transmitting means include interlock means (302—305) for selectively admitting and restraining rotation in both directions.

14. Apparatus according to Claim 1, characterised in that said spanner bar (120, 211, 516) is so positioned with respect to the drum axis that a perpendicular struck from its centerline at the intersection of the centerline with the inner drum surface forms an angle with a drum inner surface tangent struck from the same point which is in the lock angle range for the materials employed to form the drum and shoe surfaces.

### Patentansprüche

1. Vorrichtung zum wählbaren Übertragen eines Drehmoments von einem Drehmomenteingang (105, 201, 506) zu einem Drehmomentausgang (109, 204, 507) und zum Sperren der Drehmomentübertragung vom erwähnten Ausgang zum erwähnten Eingang, wobei die Vorrichtung eine Trommel (114, 203, 503) mit einer zylindrischen inneren Oberfläche und einem Reibungsglied (116, 117; 209, 210; 514, 515) aufweist, das in der erwähnten Trommel angeordnet ist, wobei das erwähnte Reibungsglied eine gewölbte Fläche, die gegen die innere Oberfläche der erwähnten Trommel drückt, und zwei Endteile (129, 133) aufweist, die auf der einen Seite der Achse der erwähnten Trommel liegen,

wobei die Endteile zueinander hin und voneinander weg verschiebbar sind und jeweils zwei Kraftübertragungsflächen (130, 131, 134, 135; 213, 214, 222, 223) aufweisen, die im wesentlichen radial zur erwähnten Trommel gerichtet sind,

wobei die erwähnten Kraftübertragungsflächen eine erste Fläche (131, 135; 213, 214) aufweisen, die so gerichtet ist, daß eine im wesentlichen senkrecht auf sie durch ein erstes Kraftübertragungsmittel (143; 218; 513) ausgeübte Kraft das Reibungsglied in Klemmanlage mit der inneren Oberfläche der erwähnten Trommel bewegt; und

wobei die Kraftübertragungsflächen eine zweite Fläche (130, 134; 222, 223) aufweisen, die so gerichtet ist, daß eine weitgehend senkrecht auf sie durch ein zweites Kraftübertragungsmittel (136; 220; 301; 511) ausgeübte Kraft das erwähnte Reibungsglied in der erwähnten Trommel ohne klemmende Anlage an dieser gleitend dreht; dadurch gekennzeichnet, daß:

das erwähnte Reibungsglied ein Paar Schuhe (116, 117; 209, 210; 514, 515) und eine Querstrebe (120, 211, 516) aufweist, die sich zwischen den erwähnten Schuhen erstreckt und an Stellen ihrer inneren Oberflächen anliegt, die auf der anderen Seite der Achse (121) der erwähnten Trommel liegen, wobei die Querstrebe frei von einer Anbringung entweder am erwähnten Drehmomenteingang oder am erwähnten Drehmomentausgang ist;

und die erwähnten Endteile (129, 133) der Schuhe so arrangiert sind, daß jeder von ihnen abwechselnd in beidem Umfangsrichtungen über ihre entsprechenden ersten und zweiten Kraftübertragungsflächen zwischen dem erwähnten ersten und zweiten Kraftübertragungsmittel eingeklemmt werden kann.

2. Vorrichtung nach Anspruch 1, dadurch gekennzeichnet, daß sie ein Vorspannungsmittel (126, 212) aufweist, das die Enden der erwähnten Schuhe, die auf der deren Berührungsstellen mit der erwähnten Querstange gegenüberliegenden Seite der Trommelachse liegen, auseinanderdrückt.

3. Vorrichtung nach Anspruch 1 oder 2, dadurch gekennzeichnet, daß wenigstens eine der erwähnten Kraftübertragungsflächen eine Wand (130, 134) einer Vertiefung aufweist, die auf der radial inneren Oberfläche eines Schuhs ausgebildet ist.

4. Vorrichtung nach Anspruch 1 oder 2, dadurch gekennzeichnet, daß wenigstens eine der erwähnten Kraftübertragungsflächen eine in Axialrichtung der erwähnten Trommel vorstehende Verlägerung (222, 223) des erwähnten Schuhs aufweist.

5. Vorrichtung nach einem der Ansprüche 1 bis 4, dadurch gekennzeichnet, daß das Kraftübertragungsmittel eine axial mit der Achse der erwähnten Trommel fluchtende Welle (105, 506) und ein zusammen mit der erwähnten Welle drehbar gelagertes Joch (136, 511) aufweist, das mit wenigstens einer der erwähnten Kraftübertragungsflächen zur Anlage bringbar ist.

6. Vorrichtung nach Anspruch 5, dadurch gekennzeichnet, daß die erwähnte Welle in beiden Richtungen drehbar und das erwähnte Joch mit zwei einander zugekehrten zweiten Kraftübertragungsflächen zur Anlage bringbar ist.

7. Vorrichtung nach einem der Ansprüche 1 bis 4, dadurch gekennzeichnet, daß das Kraftübertragungsmittel eine axial mit der Achse der erwähnten Trommel fluchtende Welle (205, 507) und eine zusammen mit der erwähnten Welle drehbar gelagerte Scheibe (220, 512) aufweist, wobei die Schiebe einen Zapfen (513) oder Schlitz (221) darin aufweist und der Zapfen oder Schlitz mit wenigstens einer der erwähnten Kraftübertragungsflächen (222, 223) zur Anlage bringbar ist.

8. Vorrichtung nach einem der Ansprüche 1 bis 4, dadurch gekennzeichnet, daß das erwähnte Kraftübertragungsmittel eine axial mit der Achse der erwähnten Trommel fluchtende Welle (204) und einen zusammen mit der erwähnten Welle drehbar gelagerten Ring (216) aufweist, wobei der erwähnte Ring einen sich radial erstreckenden Finger (218) aufweist, der mit wenigstens einer (213, 214) der erwähnten Kraftübertragungsflächen zur Anlage bringbar ist.

9. Vorrichtung nach Anspruch 1, dadurch gekennzeichnet, daß der erwähnte Drehmomenteingang eine erste Welle (105) aufweist, die axial zur erwähnten Trommel und relativ zu dieser drehbar gelagert ist,

der erwähnte Drehmomentausgang eine zweite Welle (110) aufweist, die axial zur erwähnten Trommel und relativ zu dieser drehbar gelagert ist, die erwähnten Kraftübertragungsflächen vier Flächen (130, 131, 134, 135) aufweisen, wobei jeder der erwähnten Schuhe (116, 117) eine erste Fläche einer Art (131, 135) und eine zweite Fläche anderer Art (130, 134) aufweist,

und das erwähnte Kraftübertragungsmittel aufweist: das erwähnte zweite Kraftübertragungsmittel (136), das zusammen mit der erwähnten ersten Welle (105) drehbar gelagert und mit beiden Flächen der erwähnten anderen Art (130, 134) zur Anlage brinbar ist, und das erwähnte erste Kraftübertragungsmittel (111, 143), das zusammen mit der erwähnten zweiten Welle (110) drehbar gelagert und mit beiden Flächen (131, 135) der erwähnten einen Art zur Anlage bringbar ist.

10. Vorrichtung nach Anspruch 9, dadurch gekennzeichnet, daß die erwähnten Kraftübertragungsmittel der erwähnten anderen Art Wände (130, 134) von Vertiefungen aufweisen, die in der radial inneren Oberfläche jedes Schuhs ausgebildet sind, und das erwähnte zweite Kraftübertragungsmittel ein Joch (136) mit zwei Schenkeln (139, 140), die jeweils in eine der erwähnten Vertiefungen ragen, aufweist.

11. Vorrichtung nach Anspruch 9, dadurch gekennzeichnet, daß der erwähnten Kraftübertragungsflächen der erwähnten einen Art (131, 135) sich gegenüberstehende Endflächen der erwähnten Schuhe (117, 118) aufweisen und das erwähnte erste Kraftübertragungsmittel ein sich radial zur erwähnten Trommelachse erstreckendes Element (111) mit einem zwischen den erwähnten sich gegenüberstehenden Endflächen angeordneten Teil (143) aufweist.

12. Vorrichtung nach Anspruch 1, dadurch gekennzeichnet, daß der erwähnte Drehmomenteingang eine erste Welle (201) aufweist, die axial zur erwähnten Trommel drehbar gelagert ist und die erwähnte Trommel (203, 300) mitdrehen kann, der erwähnte Drehmomentausgang eine zweite Welle (204) aufweist, die axial zur erwähnten Trommel drehbar gelagert ist, das erwähnte Kraftübertragungsmittel das erwähnte zweite Kraftübertragungsmittel (220, 301), das axial zur erwähnten Trommel drehbar gelagert und mit der einen Fläche (222, 223) der erwähnten Schuhe zur Anlage bringbar ist, und das erwähnte erste Kraftübertragungsmittel (216, 218) aufweist, das zusammen mit der erwähnten zweiten Welle (204) drehbar gelagert und mit der anderen Fläche (213, 214) der erwähnten Schuhe zur Anlage bringbar ist, und Verriegelungsmittel (224, 225; 302—305) zur wählbaren Freigabe und Sperrung einer Drehung des erwähnten zweiten Kraftübertragungsmittels in der gleichen Richtung wie der Drehrichtung der erwähnten Trommel vorgesehen sind.

13. Vorrichtung nach Anspruch 12, dadurch gekennzeichnet, daß die erwähnte erste Welle (306) in beiden Richtungen drehbar ist, die Kraftübertragungsflächen vier Flächer (213, 214, 222, 223) aufweisen, jeder der erwähnten Schuhe eine Fläche (222, 223) der einen Art und eine Fläche (213, 214) der anderen Art aufweist, das erwähnte zweite Kraftübertragungsmittel (301) mit beiden Flächen der anderen Art zur Anlage bringbar ist, das erwähnte erste Kraftübertragungsmittel (216, 218) mit beiden Flächen der einen Art zur Anlage bringbar ist und die erwähnten Verriegelungsmittel zum wählbaren Freigeben und Sperren der Drehrichtung des erwähnten zweiten Kraftübertragungsmittels Verriegelungsmittel (302—305) zum wählbaren Freigeben und Sperren der Drehung in beiden Richtungen aufweisen.

14. Vorrichtung nach Anspruch 1, dadurch gekennzeichnet, daß die erwähnte Querstrebe (120, 211, 516) so relativ zur Trommelachse angeordnet ist, daß eine senkrechte Linie von ihrer Mittellinie im Schnittpunkt der Mittellinie mit der inneren Trommeloberfläche einen Winkel mit einer Tangente an die innere Trommeloberfläche von dem gleichen Punkt aus bildet, der im Verriegelungswinkelbereich für die zur Bildung der Trommel- und Schuhoberflächen verwendeten Materialien liegt.

## Revendications

1. Appareil de transmission sélective de couple entre un organe menant (105, 201, 506) et un organe mené (109, 204, 507) et de blocage de la transmission de couple dudit organe mené vers ledit organe menant, l'appareil comprenant un tambour (14, 203, 503) ayant une surface cylindrique interne et un organe de frottement (116, 117; 209, 210; 514, 515) disposé à l'intérieur dudit tambour, ledit organe de frottement ayant une surface incurvée portant contre la surface interne dudit tambour et deux parties terminales (129, 133) situées sur un même côté de l'axe dudit tambour,

—lesdites parties terminales pouvant être rapprochées et écartées l'une de l'autre et ayant chacune deux surfaces de transmission de force (130, 131, 134, 135; 213, 214, 222, 223) orientées en général radialement audit tambour,

—lesdites surfaces de transmission de force ayant une première surface (131, 135; 213, 214) orientée de telle sorte qu'une force appliqué généralement orthogonalement à travers elle par un premier moyen de transmission de force (134; 218; 513) amène l'organe de frottement en relation de serrage contre la surface interne dudit tambour; et

—lesdites surfaces de transmission de force ayant une deuxième surface (130, 134; 222, 223) orientée de telle sorte qu'une force appliquée généralement orthogonalement à travers elle par un deuxième moyen de transmission de force (136; 220; 301; 511) fasse tourner de manière glissante ledit organe de frottement dans ledit tambour sans se serrer contre lui; caractérisé en ce que:

—ledit organe de frottement comprend une paire de patins (116, 117; 209, 210; 514, 515) et une barre-entretoise (120, 211, 516) s'étendant entre lesdits patins et s'engageant contre leurs surfaces internes en des points situés sur l'autre côté de l'axe (121) dudit tambour, la barre-entretoise étant libre d'attache par rapport audit organe menant ou audit organe mené;

—lesdites parties terminales (129, 133) des patins sont disposées de telle sorte que chacune d'elles peut alternativement être serrée dans les deux directions circonférentielles, par l'intermédiaire de leurs premières et deuxièmes surfaces correspondantes de transmission de force, entre lesdits premier et deuxième moyens de transmission de force.

2. Appareil selon la revendication 1, caractérisé en ce qu'il comprend des moyens élastiques (126, 212) tendant à écarter l'une de l'autre les extrémités desdits patins situées sur le côté de l'axe du tambour opposé à leurs points d'engagement avec ladite barre-entretoise.

3. Appareil selon la revendications 1 ou 2, caractérisé en ce qu'au moins une desdites surfaces de transmission de force comprend une paroi (130, 134) d'une cavité ménagée dans la surface d'un patin orientée radialement vers l'intérieur.

4. Appareil selon la revendication 1 ou 2, caractérisé en ce qu'au moins une desdites surfaces de transmission de force comprend un prolongement (222, 223) dudit patin, en saillie dans le sens axial dudit tambour.

5. Appareil selon l'une quelconque des revendications 1 à 4, caractérisé en ce que ledit moyen de transmission de force comprend un arbre (105, 506) aligné axialement avec l'axe du dit tambour et un étrier (136, 511) monté pour tourner avec le dit arbre, ledit étrier pouvant s'engager contre au moins une desdites surfaces de transmission de force.

6. Appareil selon la revendication 5, caractérisé en ce que ledit arbre peut tourner dans les deux sens et ledit étrier peut s'engager contre deux deuxièmes surfaces de transmission de force se faisant face en opposition l'une à l'autre.

7. Appareil selon l'une quelconque des revendications 1 à 4, caractérisé en ce que ledit moyen de transmission de force comprend un arbre (207, 507), aligné axialement avec l'axe du dit tambour, et un disque (220, 512) monté pour tourner avec ledit arbre, ledit disque portant un goujon (513) ou une encoche (221), le goujon ou l'encoche pouvant s'engager contre au moins une desdites surfaces de transmission de force (222, 223).

8. Appareil selon l'une quelconque des revendications 1 à 4, caractérisé en ce que ledit moyen de transmission de force comprend un arbre (204) aligné axialement avec l'axe dudit tambour et un collier (216) monté pour tourner avec ledit arbre, ledit collier ayant un doigt (218) s'étendant radialement et pouvant s'engager contre au moins une (213, 214) des dites surfaces de transmission de force.

9. Appareil selon la revendication 1, caractérisé en ce que ledit organe menant comprend un premier arbre (105) monté axialement par rapport audit tambour et pouvant tourner par rapport à celui-ci,
—ledit organe mené comprend un deuxième arbre (110) monté axialement par rapport audit tambour et pouvant tourner par rapport à celui-ci,
—lesdites surfaces de transmission de force comprennent quatre surfaces (130, 131, 134, 135), chacun desdits patins (116, 117) ayant une première surface d'un premier genre (131, 135) et une deuxième surface de l'autre genre (130, 134),
—et ledit moyen de transmission de force comprend ledit deuxième moyen de transmission de force (136) monté pour tourner avec ledit premier arbre (105) et pouvant s'engager contre les deux surfaces dudit autre genre (130, 134) et ledit premier moyen de transmission de force (111, 143) monté pour tourner avec ledit deuxième arbre (110) et pouvant s'engager contre les deux surfaces (131, 135) dudit premier genre.

10. Appareil selon la revendication 9, caractérisé en ce que lesdites surfaces de transmission de force dudit autre genre comprennent des parois (130, 134) de cavités ménagées dans la surface de chaque patin dirigée radialement vers l'intérieur, et ledit deuxième moyen de transmission de force comprend un étrier (136) ayant deux bras (139, 140) dont l'un s'étend dans chacune desdites cavités.

11. Appareil selon la revendication 9, caractérisé en ce que lesdites surfaces de transmission de force dudit premier genre (131, 135) comprennent des faces terminales opposées desdits patins (117, 118) et ledit premier moyen de transmission de force comprend un élément (111) s'étendant radialement par rapport à l'axe dudit tambour et ayant une partie (143) interposée entre lesdites faces terminales opposées.

12. Appareil selon la revendication 1, caractérisé en ce que ledit organe menant comprend un premier arbre (201) monté pour tourner axialement par rapport audit tambour et adapté pour entraîner ledit tambour (203, 300) en rotation avec lui, le dit organe mené comprend un deuxième arbre (204) monté pour tourner axialement par rapport audit tambour, ledit moyen de transmission de force comprend ledit deuxième moyen de transmission de force (220, 301) monté pour tourner axialement par rapport audit tambour et pouvant s'engager contre une surface (222, 223) desdits patins et ledit premier moyen de transmission de force (216, 218) monté pour tourner avec le dit deuxième arbre (204) et pouvant s'engager contre l'autre surface (213, 214) desdits patins, et des moyens de verrouillage mutuel (224, 225; 302—305) sont prévus pour admettre et restreindre sélectivement la rotation dudit deuxième moyen de transmission de force dans le même sens que le sens de rotation dudit tambour.

13. Appareil selon la revendication 12, caractérisé en ce que ledit premier arbre (306) est adapté pour touner dans les deux sens, lesdites surfaces de transmission de force comprennent quatre surfaces (213, 214, 222, 223), chacun desdits patins ayant une surface (222, 223) du premier genre et une surface (213, 214) de l'autre genre, ledit deuxième moyen de transmission de force (301) peut s'engager contre l'une et l'autre des surfaces de l'autre genre, ledit premier moyen de transmission de force (216, 218) peut s'engager contre l'une et l'autre des surfaces du premier genre, et lesdits moyens de verrouillage mutuel pour admettre et restreindre sélectivement la rotation dudit deuxième moyen de transmission de force comprennent des moyens de verrouillage mutuel (302—305) pour admettre et restreindre sélectivement la rotation dans l'un et l'autre sens.

14. Appareil selon la revendication 1, caractérisé en ce que ladite barre-entretoise (120, 211, 516) est positionnée par rapport à l'axe du tambour de telle sorte qu'une perpendiculaire tracée à partir de sa ligne médiane à l'intersection de la ligne médiane avec la surface interne du tambour forme, avec une tangente à la surface interne du tambour tracée à partir du même point, un angle qui est dans la gamme de l'angle de coincement pour les matériaux utilisés pour constituer les surfaces du tambour et des patins.

FIG. 1

FIG. 2

FIG. 3

FIG. 4

1

FIG. 5

FIG. 6

FIG. 7

FIG. 8

FIG. 9

FIG. 10A

FIG. 10

FIG. 11

FIG. 12

FIG. 13

3

FIG. 14

FIG. 15

FIG. 16

FIG. 17

FIG. 18

FIG. 19

FIG. 20

FIG. 21